Europäisches Patentamt

European Patent Office

Office européen des brevets

(11) Publication number : **0 478 367 A2**

# (12) EUROPEAN PATENT APPLICATION

(21) Application number : **91308856.3**

(22) Date of filing : **27.09.91**

(51) Int. Cl.⁵ : **G11B 7/09**

(30) Priority : **28.09.90 US 589708**

(43) Date of publication of application :
**01.04.92 Bulletin 92/14**

(84) Designated Contracting States :
**DE FR GB**

(71) Applicant : **International Business Machines
Corporation
Old Orchard Road
Armonk, N.Y. 10504 (US)**

(72) Inventor : **Fennema, Alan August
2705 North Laverne
Tucson, AZ 85712 (US)**
Inventor : **Klem, Robert Alan
6401 Placita De Ona
Tucson, AZ 85741 (US)**

(74) Representative : **Atchley, Martin John
Waldegrave
IBM United Kingdom Limited Intellectual
Property Department Hursley Park
Winchester Hampshire SO21 2JN (GB)**

(54) Control of light beam focusing system in optical data storage apparatus.

(57)    The present invention relates to an optical data storage apparatus comprising an optical data storage member, means for generating a light beam, means for directing the light beam onto the storage member for performing data storage and readback operations on the storage member, means for receiving a reflected beam of light from the storage member, means for detecting variations in the intensity of said reflected beam of light and for generating corresponding electrical signals, focus control means for controlling the focus of said light beam on the storage member, a servo mechanism for supplying a selected focus signal to the focus control means so as to produce a selected focus condition (31), and a calibrating system for calibrating the focus control means.

According to the invention the storage apparatus is characterised in that the calibrating system comprises means for sequentially supplying to the servo mechanism a positive and a negative offset focus signal (FES OFFSET), means for measuring the values of the electrical signals (36.37) representing the intensity of the reflected light beam for each of the offset focus signals, means for determining the difference between the two electrical signal values, means for comparing the difference with a reference value, and means for supplying the offset signals to the servo mechanism to modify the selected focus condition (35) when the difference is less than the reference value.

EP 0 478 367 A2

Jouve, 18, rue Saint-Denis, 75001 PARIS

TES OR READBACK SIGNAL

INITIAL FOCUS
BEST FOCUS

32

30
36
35
31
37
33

FES OFFSET

$-$  o  $+$

FIG-3

The present invention relates to optical focusing systems, particularly the acquisition of focus in such systems. The present invention is particularly useful for optical disk recorders or data storage apparatus.

Background of the Invention

Optical disk recorders, in particular, employ objective lenses having very small size and mass. Such a lens is typically moveable along its optical axis for effecting focusing motions. The depth of field of such a lens is typically small such that an in-focus condition must be rather precise for effecting effective recording and readback of signals onto and from an optical record disk. Generally, the acquisition of focus of the objective lens, i.e., the movement of the objective lens to an in-focus position, should be reliably and quickly accomplished for preventing retries and other delays in using an optical disk recorder. The initially acquired focus may not be the best focus for use in a particular application. For example, in video recorders, it is known that the amplitude of the video readback signal is used for obtaining a best focus indication. In many optical disks of the data recording type, there is no recorded signal for effecting the calibration of focus to a maximum readback amplitude.

Further, focusing errors in an optical disk storage apparatus may result in a spot of focused light that is larger than desired and which therefore produces a smaller amplitude readback signal and less light intensity at the disk during write operations. Such conditions can cause errors in data recording and readback. Offset errors in the focus error signal (FES) may be caused by initial manufacturing tolerances as well as thermal effects. It is desirable to eliminate these steady state errors.

Many focus acquisition systems in optical disk storage apparatus find the peak of the FES signal which is adjacent to a idealised focus condition, as is well known. Finding the peak may require measurement of a large number of points on the FES signal; this action is particularly true when there are minor fluctuations occurring over the range of the FES signal with respect to changing focus conditions. Such an action is time consuming since for each focus offset value an entire rotation of the disk would normally be required for eliminating signal variations due to disk angular positions. Other considerations in focusing systems is that the peak of the FES signal that represents best focus may not be the most desirable operating point. Machine vibration as well as disk runout may produce small errors in the ability of the focusing servo to maintain the idealised in-focus condition. Under some circumstances, a slight defocusing may result in an undesired loss of readback signal amplitude. It is desired to eliminate these problems by a simple focus acquisition system.

US -A- 4,733,066 shows a focus acquisition system in which focus acquisition is acquired during a so-called open loop mode. Then, upon detecting an in-focus condition, a focus maintenance servo is actuated for maintaining the focus of the objective lens. This patent also shows the typical control signal having a ramp shape for moving the objective lens to the in-focus position. The arrangement described requires a resilient means for supporting the focusing lens. It is desirable to eliminate such resilient means.

European patent application EP -A- 91304858.3 (TU9-90-002) shows a focus acquisition system using a series of pulses for softly moving a lens toward an in-focus condition. A peak detector is used for detecting a peak of the FES signal for defining the in-focus condition. It is desirable to provide a best focus acquisition system which results in a more suitable in-focus condition.

US -A- 4,332,022 (now RE32051) shows using the readback signal amplitude as a criterion for determining a best focus condition while using a video signal for indicating a best focus condition. It is desirable to provide a quicker and simpler way of acquiring focus that will maintain a relatively good readback signal amplitude even with slight variations of focus condition.

US -A- 4,707,648 shows a focus acquisition system in which a focus error signal and an offset signal are combined to drive a focus actuator. A plurality of measurements are made for finding a focus condition at which the readback signal has a maximum amplitude.

The object of the present invention is to provide an improved system for controlling the focusing of the light beam used in an optical data storage apparatus.

The present invention relates to an optical data storage apparatus comprising an optical data storage member, means for generating a light beam, means for directing the light beam onto the storage member for performing data storage and readback operations on the storage member, means for receiving a reflected beam of light from the storage member, means for detecting variations in the intensity of said reflected beam of light and for generating corresponding electrical signals, focus control means for controlling the focus of said light beam on the storage member, a servo mechanism for supplying a selected focus signal to the focus control means so as to produce a selected focus condition, and a calibrating system for calibrating the focus control means.

According to the invention the storage apparatus is characterised in that the calibrating system comprises means for sequentially supplying to the servo mechanism a positive and a negative offset focus signal, means for measuring the values of the electrical signals representing the intensity of the reflected light beam for each of the offset focus signals, means for determining the difference between the two electrical signal values, means for comparing the difference with a reference value, and means for supplying the offset signals to the servo mechanism to modify the selected focus condition when the difference is less than the reference value.

According to one embodiment of the invention, at a near focus condition, either the tracking error signal amplitude or a readback signal amplitude is sampled at spaced positions from the initial approximately in-focus condition. A focus offset control moves the focus condition on both sides of the current in-focus condition. When the TES or readback signal amplitude at the offset positions are equal then a best focus condition is defined.

In a preferred embodiment of the invention, an initial focus is acquired using ramp and peak detection techniques. Once the approximate initial focus position of a lens is determined, then the TES or readback signal is analysed at the two offset positions from the current focus position for finding a focus condition wherein slight out of focus changes will not substantially reduce the amplitude of the TES or readack signals.

In order that the invention may be more readily understood an embodiment will now be described with reference to the accompanying drawings, in which:-

Fig. 1 is a simplified flow chart showing the practice of the present invention,

Fig. 2 is a graph illustrating the well-known FES signal characteristics in and around an in-focus condition,

Fig. 3 is a graph showing the relationship of FES offset with respect to a tracking error signal (TES) or a readback signal amplitude,

Fig. 4 is a simplified block-diagram of an optical disk recorder in which the invention is incorporated, and

Fig. 5 is a simplified flow chart of operations which can be performed in the Fig. 4 illustrated optical disk recorder for practising the present invention.

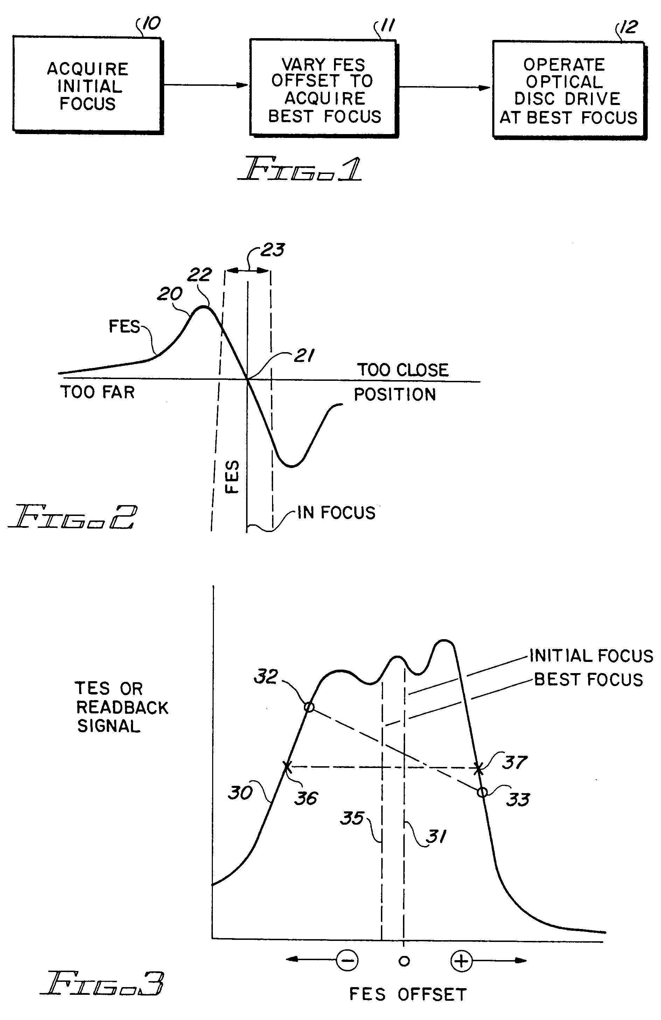

Referring to the drawings, like numbers indicate like parts, functions, and structural features in the various figures. Referring to Fig. 1, a flow chart for practising the present invention in an optical disk data storage apparatus is shown. At step 10 an initial focus condition is acquired for the light beam focusing system of the storage apparatus. Such an initial focusing system may be employed in the arrangement illustrated in European Patent Application 91304858.3 (TU9-90-002). At step 11, an FES (focus error signal) offset signal value is varied to acquire a best focus condition. A best focus condition is defined as a focus condition in which a slight defocusing will not significantly change the amplitude of any data readback signal or TES (tracking error signal, relating to the following by the light beam of data storage tracks in the optical record disk) signal. This is in contradistinction to a focus condition made at a maximum amplitude TES or readback signal in which a slight change is the focus condition can cause a relatively rapid degradation of either the TES or the readback signal. Finally at step 12 the optical disk drive in the storage apparatus is operated at the best focus condition determined in step 11.

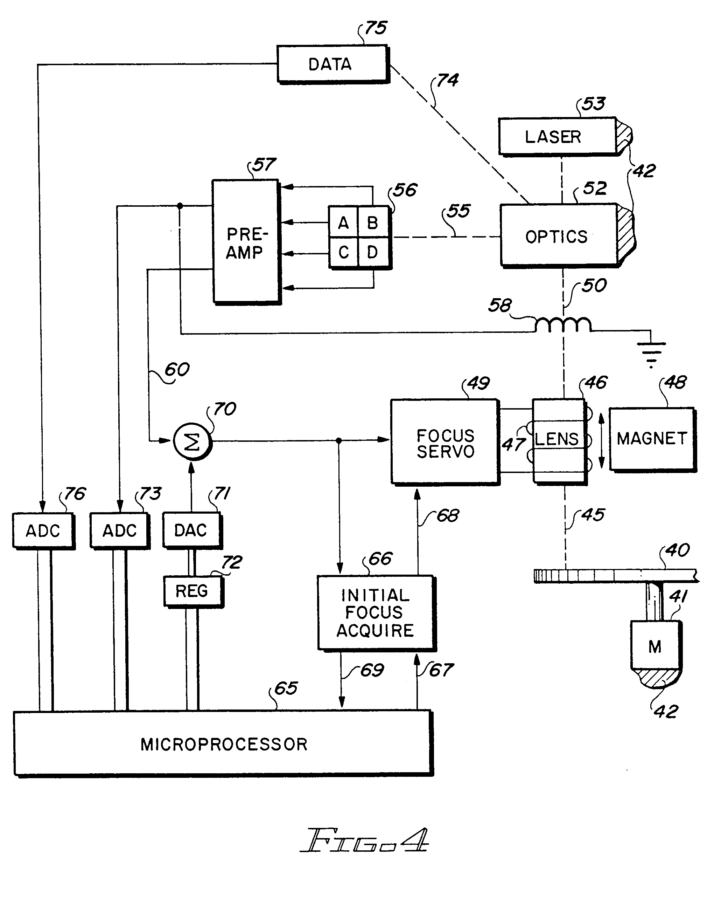

Referring next to Fig. 2 a typically FES curve with relationship to focus condition is shown. The horizontal axis indicates the position is the lens with respect to the focused plane, i.e., the recording surface of the optical disk. As distance of the lens from the focal plane is varied and the focus condition changes from an in-focus condition at 21 to out-of-focus conditions the FES signal 20 reaches a peak at 22 before it is moved too far away from the local plane. A similar peak occurs before the lens is moved too close to the focal plane.

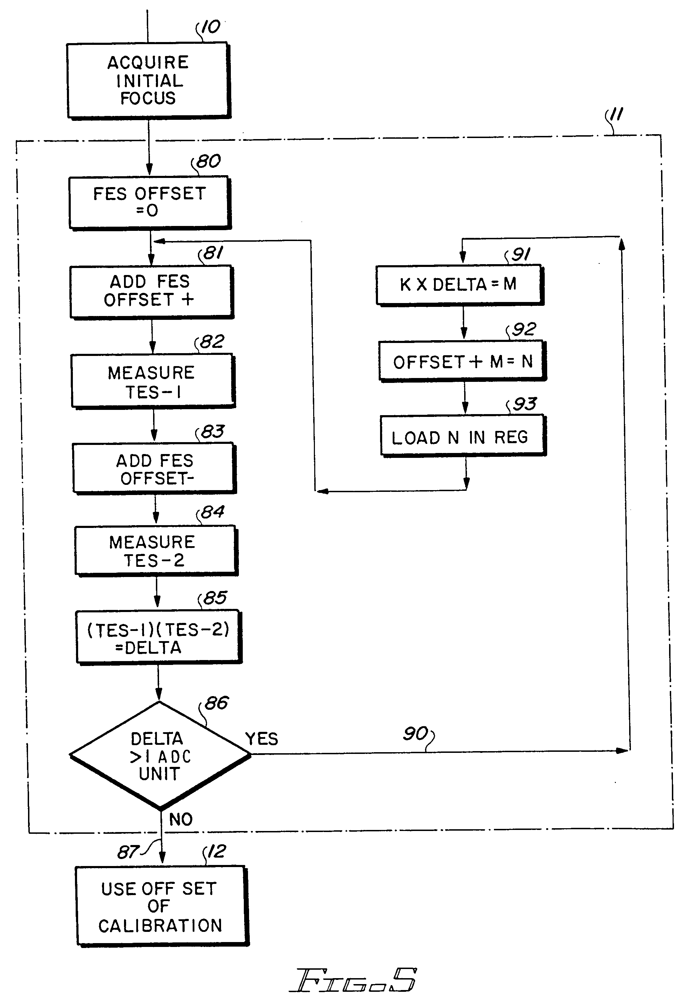

At step 10 of Fig. 1, a focus condition within the range indicated by couple headed arrow 23 is acquired. This focus condition may be actually at the zero axis crossing at 21; but because of device parameters and disk parameters, such as focus condition may not be the best focus condition. Accordingly, a further procedure as in step 11 and as described with respect to Fig. 3 is followed for finding a best focus condition.

A focus servo mechanism is provided as later described with an FES offset input for controlling the focus drive signal to provide a focus condition other than that precisely indicated by the FES signal. In Fig. 3 the horizontal axis represents the FES offset value with a zero offset value being at an initial focus condition represented by vertical dashed line 31. Curve 30 represents the TES amplitude or the readback signal amplitude as a function of FES offset from the zero position. From the zero FES offset position two offsets are made. One is a positive offset which is sufficient to cause a defocusing which on one (the right hand) slope of the curve 30 while a second is negative offset and is sufficient to cause a defocusing which is on the other (the left hand) slope of the curve 30.

From an initial focus condition, as represented in Fig. 2, the positive and negative focus offsets resulted in amplitudes of the TES signal as represented at 33 and 32 respectively. Since the measured value at 32 is much greater than the measured value at 33, the initial focus condition could be too close to one of the slopes causing a relatively large change in TES or readback signal amplitude even though such could be at a maximum readback signal amplitude at the best focus condition. It is desirable to provide a best focus condition in which the readback and TES signal amplitudes are equal at the two, positive and negative, FES offset values such as at 36 and 37 which results in a best focus condition indicated by vertical dashed line 35. Curve 30 also shows the variations in TES or readback signal amplitudes because of noise and other characteristics. It is to accommodate these variations that the present invention finds its most valuable application.

Referring next to Fig. 4, the operation of the invention as above-described as implemented in a preferred embodiment is shown. The optical disk player/recorder includes a rotatable magneto-optic data storage disk 40 mounted on a motor 41 which in turn is mounted on a frame 42 of the apparatus. A laser beam passing through path 45 from lens 46 is reflected by the surface of disk 40 back through lens 46 in the usual manner. A focusing coil 47 fixed on lens 46 cooperates with a permanent magnet 48 mounted on a head carriage (not shown) for moving lens 46 along its optical axis which is substantially coincident with path 45. Focus servo 49 is connected to focusing coil 47 for effecting focus control of lens 46 with respect to disk 40. A laser 53 supplies a laser beam through optical system 52 over path 50 to lens 46 and thence over path 45 to disk 40 in the usual manner. The reflected laser beam retraces paths 45 and 50 and is partially redirected along path 55 to quad detector 56 for detecting the focus condition and generating a tracking error signal (TES) in a usual manner. PREAMP circuit 57 receives the signals from the four electrically independent photo detector units A, B, C, and D of detector 56 for logically combining some to create treacking and focus error signals. PREAMP circuit 57 supplies the FES signal over line 60 to be used by focus servo 49 in maintaining focus of lens 46.

Microprocessor 65 is programmed for controlling the Fig. 4 illustrated optical disk apparatus. With respect to the focus control, microprocessor 65 actuates initial focus acquire circuit 66 by sending a signal over line 67. Circuit 66 may be that as described and shown in European Patent Application 91304858.3 (TU9-90-002) which is incorporated herein by reference. Initial focus acquire circuit 66 then actuates focus servo 49 by a signal supplied over line 68 to acquire focus in the usual manner. The focus error signal (FES) on line 60 is also supplied to initial focus acquire circuit 66 so as to indicate when focus is acquired. When focus is acquired, focus servo 49 maintains the focus of lens 46. Circuit 66 notifies microprocessor 65 by a signal over line 69 when focus has been initially acquired. At this time, microprocessor 65 will then initiates step 11 (Fig. 1), the focus acquire circuit 66 having completed step 10.

Summing circuit 70 is electrically interposed between PREAMP circuit 57 and focus servo 49 for receiving an FES offset value signal from digital to analog converter DAC 71. Microprocessor 65 sets the FES offset value into register REG 72 which powers DAC 71 to provide the offset signal. In executing machine step 11, microprocessor 65 can select a TES signal supplies from PREAMP circuit 57 to ADC analog to digital converter 73. This is the tracking error signal TES which is generated from the quad detector 56 using known techniques. The TES signal indicates the relative position of beam 45 to data storage tracks on disk 40 and is supplied to tracking coil 58 to move lens 46 in a cross track direction for controlling the cross track position of the beam on path 45. Such tracks are grooved with the grooving generating the tracking error signal through differences in reflection of the light beam travelling through path 45. ADC 73 supplies a digitised indication of the magnitude of TES to microprocessor 65. As an alternative, the amplitude of the data readback signal may be used rather than the TES. In this regard, a portion of the light reflected from disk 40 is redirected by optics 52 along light path 74 to data detector 75 which includes not only photodetectors but also the usual signal processing circuits associated with such data detection. The signal output from data detection circuit 75 is supplied to ADC 76 which digitises the amplitude and supplies the digitised amplitude to microprocessor 65.

Fig. 5 is an abbreviated flow chart showing the operation of the Fig. 4 illustrated device in performing step 11 of Fig. 1. The flow chart of Fig. 5 assumes that the initial focus has been acquired in step 10. At step 80 the FES offset is made equal to zero, i.e., the contents of register 72 are set to a reference value. At step 81, the positive FES offset is added to zero the value which causes a TES readback at point 33 of Fig. 3. At step 82 the TES amplitude indicated by ADC 73 (TES-1) is sampled by microprocessor 65. At step 83, the negative FES offset is added to the initial offset of zero resulting in the TES value 32. At step 84, the TES amplitude value at point 32 (TES-2) is measured by microprocessor 65 sampling ADC 73. Then at step 85 the two amplitude values at 32 and 33 (TES-1, TES-2) are compared to create a delta value. At step 86 the measured delta value is compared with a permitted range of differences such as one change in ADC 76 output. The range of acceptability can be a plurality of ADC 76 increments of digital output signal values. If the delta value is greater than one unit of change in ADC 76 output which is the case in measuring the values 32 and 33, then new FES offset values are calculated, steps 81 through 86 are again performed with the new positive and negative offsets being respectively added to and subtracted from the current offset values. At step 91, the value of delta is multiplied by a small constant K to generate a modifier M for the offset. At step 92, the offset value currently used for generating the test points (on the TES curve) is modified by M (M is an assigned quantity) for reaching a new value N. At step 93 the new value N is loaded into the REG 72. Thereafter, steps 81 through 86 are repeated. Note that in steps 81 and 83 the positive and negative offsets are added to the current offset values.

When at step 86 the value of delta is within a permitted range, such as represented by points 36 and 37, then path 87 is followed to step 12 which uses the last calculated focus offsets as the calibration values to be supplied to register 72 and maintained therein during subsequent operations.

It is to be understood that the data readback signal supplied through ADC 76 may be used in place of TES. With a grooved record record medium, a TES signal is a little easier to use. When a non-grooved medium is used, then some data signal has to be recorded and then the readback data signal is used for the FES calibration.

## Claims

1. Optical data storage apparatus comprising
    an optical data storage member (40),
    means (53.52) for generating a light beam,
    means (46,47,58) for directing said light beam onto said storage member for performing date storage and readback operations on said storage member,
    means (52) for receiving a reflected beam of light from said storage member,
    means (56,57) for detecting variations in the intensity of said reflected beam of light and for generating corresponding electrical signals,
    focus control means (47) for controlling the focus of said light beam on said storage member,
    a servo mechanism (49,66) for supplying a selected focus signal to said focus control means so as to produce a selected focus condition, and
    a calibrating system for calibrating said focus control means,
        characterised in that said calibrating system comprises
    means (70, 71, 72) for sequentially supplying to said servo mechanism a positive and a negative offset focus signal,
    means (56) for measuring the values of the electrical signals representing the intensity of the reflected light beam for each of said offset focus signals,
    means (65) for determining the difference between said two electrical signal values,
    means (65) for comprising said difference with a reference value, and
    means for supplying said offset signals to said servo mechanism to modify said selected focus condition when said difference is less than said reference value.

2. An optical data storage apparatus comprising:
    a motor mounting an optical storage member for rotation;
    optical means in optical communication with the storage member for supplying a light beam thereto and for receiving a reflection of the light beam from the storage member, having focusing means for focusing the light beam on the storage member and having sensing means for sensing the reflected light beam from the storage member and for supplying an electrical signal indicative of the intensity of the received reflected light;
    offset means connected to the focusing means for altering the focusing of the light beam and having an input means for receiving offset values indicating the amount and direction of focusing offset;
    initial means connected to the input means of the offset means for setting a current offset value in the input means;
    calibration means connected to the input means of the offset means and to the sensing means for adding positive and negative increments to a current offset value and for sequentially sending said positive and negative incremented offset values to the input means,
    measuring means in the calibration means connected to the sensing means for measuring the amplitude of the electrical signal for each of said incremented values, and
    calculation means in the calibration means for receiving the two measured values for comparing the two measured values, and, when the two measured values have a calculated difference of less than a predetermined value, for indicating to the offset means to use the current offset value as a last current offset value for any ensuing signal processing operations in the storage system, and otherwise calculating a new current offset value and sending the new current offset value to the offset means to be used as a current value.

*Fig-1*

*Fig-2*

*Fig-3*

FIG. 4

```
                  ┌──────────────┐(10
                  │   ACQUIRE    │
                  │   INITIAL    │
                  │    FOCUS     │
                  └──────┬───────┘                                    (11
     ┌───────────────────┼──────────────────────────────────────────────┐
     ¦            ┌───────▼──────┐(80                                     ¦
     ¦            │  FES OFFSET  │                                        ¦
     ¦            │     = 0      │                                        ¦
     ¦            └──────┬───────┘              ┌──────────────┐(91       ¦
     ¦            ┌──────▼───────┐(81   ┌──────▶│ K X DELTA = M│          ¦
     ¦            │   ADD FES    │      │       └──────┬───────┘          ¦
     ¦            │   OFFSET +   │      │       ┌──────▼───────┐(92       ¦
     ¦            └──────┬───────┘      │       │ OFFSET + M = N│         ¦
     ¦            ┌──────▼───────┐(82   │       └──────┬───────┘          ¦
     ¦            │   MEASURE    │      │       ┌──────▼───────┐(93       ¦
     ¦            │    TES-1     │      │       │ LOAD N IN REG│          ¦
     ¦            └──────┬───────┘      │       └──────┬───────┘          ¦
     ¦            ┌──────▼───────┐(83   │              │                  ¦
     ¦            │   ADD FES    │      └──────────────┘                  ¦
     ¦            │   OFFSET-    │                                        ¦
     ¦            └──────┬───────┘                                        ¦
     ¦            ┌──────▼───────┐(84                                     ¦
     ¦            │   MEASURE    │                                        ¦
     ¦            │    TES-2     │                                        ¦
     ¦            └──────┬───────┘                                        ¦
     ¦            ┌──────▼───────┐(85                                     ¦
     ¦            │ (TES-1)(TES-2)│                                       ¦
     ¦            │   =DELTA     │                                        ¦
     ¦            └──────┬───────┘                                        ¦
     ¦                   │              86                                ¦
     ¦               ╱───▼───╲                        90                  ¦
     ¦              ╱  DELTA   ╲   YES                                     ¦
     ¦              ╲ >1 ADC   ╱──────────────────────────────────────────┘
     ¦              ╲  UNIT   ╱
     └───────────────╲──┬──╱
                   87    │ NO
                  ┌──────▼───────┐(12
                  │  USE OFF SET │
                  │      OF      │
                  │ CALIBRATION  │
                  └──────────────┘
```

FIG. 5